# EUROPEAN PATENT APPLICATION

(11) **EP 1 298 915 A1**
(43) Date of publication of application: **02.04.2003**
(21) Application number: 01945645.8
(22) Date of filing: 27.06.2001
(51) Int. Cl.: H04N 1/387, G06T 1/00, G10L 19/00, G10L 11/00

(54) **ADDITIONAL INFORMATION EMBEDDING DEVICE AND ADDITIONAL INFORMATION EMBEDDING METHOD**

(30) Priority: 28.06.2000 JP 2000194089; 29.06.2000 JP 2000196764
(71) Applicant: Sony Corporation, Tokyo 141-0001 (JP)
(72) Inventor: OGINO, Akira c/o SONY CORPORATION, Shinagawa-ku, Tokyo 141-0001 (JP)
(74) Representative: DeVile, Jonathan Mark, Dr.
(86) International application number: JP0105527
(87) International publication number: WO02001849

(57) **Abstract**

The additional information inserting apparatus according to the present invention encodes additional information signals using two or more kinds of encoding methods/encoding formats to generate two or more kinds of insertion patterns encoded by respective methods, and multiplexes and superimposes the respective encoded insertion patterns to main information signals. Thus, the additional information can be detected by decoding the encoded insertion patterns in accordance with at least either of the encoding methods/encoding formats. Even though one set of the additional information is deteriorated due to signal processing, attack, or other causes, the additional information can be detected correctly using the other set of the additional information. Furthermore, even though the additional information is important information as seen from a view of security, the security information cannot be completely erased, revised, or caused to be useless as long as all the encoding methods are not broken, which can ensure the protection of the copyright.

## Description

### Technical Field

The present invention relates to an additional information inserting apparatus and method for inserting additional information into main information signals such as image signals, music signals, and text signals, and in particular, to an additional information inserting apparatus and method for inserting additional information using plural kinds of encoding formats which are different from each other in the encoding method or encoding key such that insertion patterns of the additional information can be detected using any format.

### Background Art

Conventionally, digital information recording apparatuses such as a digital VTR and a disc recording/reproducing apparatus using a magneto-optical disc as a recording medium have been used. Furthermore, a DVD (a digital video disc as a trade mark, or a digital versatile disc) to which information signals can be recorded has been also used, which is loaded to a PC (a personal computer).

Digital data or contents recorded in these digital information recording apparatuses can be undesirably copied or revised easily, and the copyright of such data or contents is confronted with a crisis of being infringed. It is not sufficient to reinforce the Copyright Act or other regulations, and such data or contents should be fairly used and unfair use thereof must be excluded in view of information technique so as to ensure the protection of the copyright.

In order to protect the copyright, it is proposed that additional information signals should be superimposed to or inserted into main information signals such as digital image signals, digital audio signals, and digital data for use in a computer. In this case, the additional information is of digital signals. The additional information can be inserted into predetermined areas of digital information signals, such as header portions each arranged at each block-based data of the digital information signals, a TOC (Table of Contents) area etc. which areas are definitely distinguished from areas having the main digital information signals.

The operation of copying digital information signals can be controlled by inserting information for controlling copy of data or contents (copy once or never copy), or copyright information (copyright representation) into the digital information signals.

In the conventional data communication system, additional information is not directly superimposed to main digital information signals, but indirectly superimposed to areas such as header portions. For this reason, since the additional information can be easily deleted or lost comparatively by filtering or revising, there arise a problem that a recording apparatus or a reproducing apparatus cannot detect necessary additional information. Especially, in case the additional information is such as controlling information for preventing unfair copy of data or contents, or copyright information, the purpose cannot be realized due to absence of the additional information.

In case the additional information is indirectly inserted into the above-described areas, only main information signals can be obtained when digital information is converted to analog information, thereby the additional information will be lost. This means that, even though the additional information such as the controlling information for preventing unfair copy of data or contents is superimposed to digital information signals so as to suppress unfair copy thereof, this will not be effective at all after the digital information signals are converted to analog information signals.

In view of the problem on the protection of the digital data or contents, the technique of "Digital Watermarking" or "Data Hiding" is becoming noteworthy as a technique for inserting additional information signals into main digital information signals, and various methods have been proposed.

The Digital Watermarking is a technique for inserting additional information into contents of images or music such that the additional information will be scarcely visible or audible (refer to "Data Hiding technique for supporting Digital Watermarking (the first and second volumes)" (the February 24, 1997 and the March 10, 1997 issues of Nikkei Electronics magazine). These articles are based on "Techniques for data hiding", IBM System Journal, vol.35, NOS 3&4, 1996 p313-339.).

The technique of Digital Watermarking is realized by inserting information different from original information into a part of host signals by the use of statistical characteristics of the host signals into which the information will be inserted. For example, in case copyright information is inserted into the host signals using the Digital Watermarking technique, channel of data distribution or existence of right of data use is examined and copy controlling information is verified by making watermarks or the copyright information appear when contents are obtained afterward, thereby illegal copy can be suppressed.

On the other hand, in case providers which provide digital data or contents insert additional information into main information signals by encoding the additional information using respective encoding methods or respective keys, the additional information inserted into the main information signals cannot be detected when a decoder of an information recording and/or reproducing apparatus such as a DVD recorder does not correspond to an encoding method employed by the contents providers. As a result, credibility of the copy controlling will be lost.

Even though original additional information is identical, encoded additional information signals or insertion patterns to be inserted into the main information signals become different in case encoding method is different. Also, even though encoding method as well as original additional information is identical, the insertion patterns generated after encoding become different in case key information to be used for encoding is different.

In this technical field, at present, there coexist plural encoding formats. Thus, in case a digital information recording and/or reproducing apparatus employs a mechanism which can detect only additional information inserted by specified encoding format, the digital information recording and/or reproducing apparatus cannot detect additional information inserted by other encoding formats. Accordingly, unified copy controlling cannot be performed, and credibility of the protection of data or contents will be lost.

In order to solve the problem, under the recognition of the existence (coexistence) of various encoding methods and encoding formats, it is desirable that additional information is surely detected from main information signals even though the additional information conforms to any of the encoding methods and encoding formats.

In Japanese Laying-Open Patent 2000-92461 (corresponding to United States Patent Application Number 09/392050), there is disclosed an additional information superimposing method capable of extracting additional information which has undergone the spread spectrum and is superimposed to image signals, even though the image signals are those which are converted from pictures of different aspect ratios.

The additional information superimposing method disclosed in the publication is adapted for solving the problem that additional information cannot be detected due to the difference of aspect ratios or picture formats, and is not adapted for solving the problem that additional information cannot be detected due to the difference of encoding methods or encoding formats.

### Disclosure of the Invention

Accordingly, the present invention has an object to overcome the above-mentioned drawbacks of the prior art by providing an additional information inserting apparatus and method for desirably inserting additional information into main information signals such as image signals or music signals such that the additional information will be scarcely visible or audible.

Furthermore, the present invention provides an additional information inserting apparatus and method for desirably inserting additional information into main information signals so that insertion patterns which are encoded by one of plural encoding formats whose encoding methods or encoding keys are different from each other can be detected by any of the encoding methods or encoding formats.

The above object can be attained by providing an additional information inserting apparatus for superimposing additional information to main information signals, comprising means for generating first insertion signals from the additional information and generating second insertion signals from the additional information, and means for superimposing the respective insertion signals generated from the insertion signal generating means to the main information signals.

Also the above object can be attained by providing an additional information inserting method for superimposing additional information to main information signals, comprising the steps of generating first insertion signals from the additional information and generating second insertion signals from the additional information, and superimposing the respective insertion signals generated in the insertion signal generating step to the main information signals.

Also the above object can be attained by providing a recording medium which has recorded therein signals being main information signals having superimposed thereto additional information, wherein first insertion signals generated from the additional information and second insertion signals generated from the additional information are multiplexed and superimposed to the main information signals.

Also the above object can be attained by providing a recording medium which has recorded therein signals being main information signals having superimposed thereto additional information, wherein the recording medium is manufactured by undergoing the steps of generating first insertion signals from the additional information and generating second insertion signals from the additional information, superimposing the respective insertion signals generated in the insertion signal generating step to the main information signals, and recording signals having superimposed thereto the respective insertion signals generated in the insertion signal superimposing step to the recording medium.

The additional information inserting apparatus and method according to the present invention encode additional information signals using two or more kinds of encoding methods or encoding formats to generate two or more kinds of insertion patterns encoded by respective methods, and perform the spatial multiplexing, frequency division multiplexing, overwriting multiplexing, or time division multiplexing, and superimpose the respective encoded insertion patterns to main information signals.

Thus, the additional information can be detected by decoding the encoded insertion patterns in accordance with at least either of the encoding methods or encoding formats.

When the same additional information is encoded by a plurality of encoding means and inserted into the main information signals, even though one set of the additional information is deteriorated due to signal processing, attack, or other causes, the additional information can be detected correctly using the other set of the additional information.

Furthermore, according to the additional information inserting apparatus and method of the present invention, when a plurality of encoding methods or encoding formats are employed, even though the additional information is important information as seen from a view of security, the security information cannot be completely erased, revised, or caused to be useless as long as all the encoding methods are not broken. Even though the additional information is deteriorated due to attack, the additional information can be surely transmitted by employing another encoding method or encoding format, and multiplexing or multiplexing in the time divisional manner and superimposing encoded insertion patterns to main information signals.

These objects and other objects, features and advantages of the present invention will become more apparent from the following detailed description of the preferred embodiments of the present invention.

### Brief Description of the Drawings

FIG. 1 shows a block diagram of an additional information inserting apparatus according to the present invention.
FIG.2 shows a block diagram of an additional information detecting apparatus for detecting additional information from image signals having superimposed thereto the additional information.
FIG.3 shows a block diagram of an additional information detecting apparatus for detecting additional information from image signals having superimposed thereto the additional information.
Fig.4 shows a circuit diagram of a code modulating apparatus which is used in encoding and decoding processing.
Fig.5 shows another example of a block diagram of an additional information inserting apparatus according to the present invention.

### Best Mode for Carrying Out the Invention

The additional information inserting apparatus and method according to the present invention will further be described below concerning the best modes for carrying out the present invention with reference to the accompanying drawings.

In the following explanation, the present invention will be explained by employing an embodiment, in which additional information signals are encoded using two kinds of encoding methods, and the encoded additional information signals are multiplexed in the time divisional manner and superimposed to output image signals supplied from a recording medium which has recorded therein the image signals.

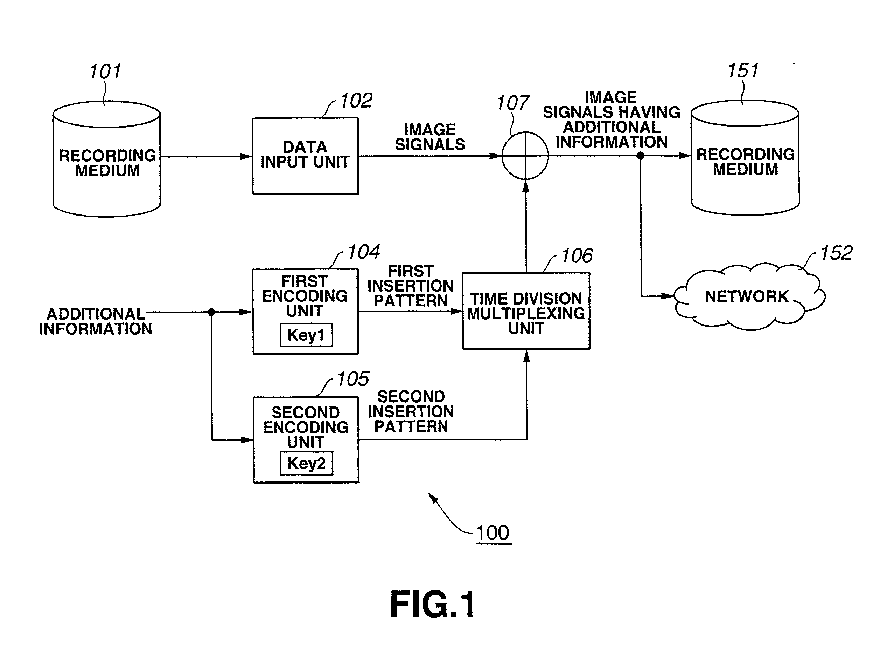

Fig.1 shows a block diagram of an additional information inserting apparatus 100 according to the present invention. The additional information inserting apparatus 100 encodes additional information signals using two kinds of encoding methods to generate two kinds of insertion patterns, and multiplexes in the time divisional manner and superimposes the respective insertion patterns to image signals.

As shown in Fig.1, the additional information inserting apparatus 100 includes a recording medium 101 of the image signal reproducing side, a data input unit 102, a first encoding unit 104, a second encoding unit 105, a time division multiplexing unit 106, and a superimposing unit 107.

Read out signals reproduced from the recording medium 101 are supplied to the data input unit 102, and are supplied as reproduced image signals to the superimposing unit 107.

The additional information signals to be inserted into the image signals are supplied to the first encoding unit 104 and the second encoding unit 105, respectively. The first encoding unit 104 has a key 1, and encodes the additional information signals using the key 1 in a first encoding method. Then, the first encoding unit 104 supplies the encoded signals as first insertion pattern signals to the time division multiplexing unit 106. The second encoding unit 105 has a key 2, and encodes the additional information signals using the key 2 in a second encoding method, which is different from that employed at the first encoding unit 104. Then, the second encoding unit 105 supplies the encoded signals as second insertion pattern signals to the time division multiplexing unit 106. The key 1 may be equal to the key 2, or may be different from the key 2.

The time division multiplexing unit 106 multiplexes the first insertion pattern signals supplied from the first encoding unit 104 and the second insertion pattern signals supplied from the second encoding unit 105 in the time divisional manner, and supplies the multiplexed signals to the superimposing unit 107.

The superimposing unit 107 composites the image signals read out from the recording medium and the insertion patterns multiplexed in the time divisional manner, and outputs image signals having additional information. The output image signals will be recorded to a recording medium 151 of the image signal recording side different from the recording medium 101, which will be used in other apparatuses. The output image signals may be transmitted to other remote apparatuses via a network 152.

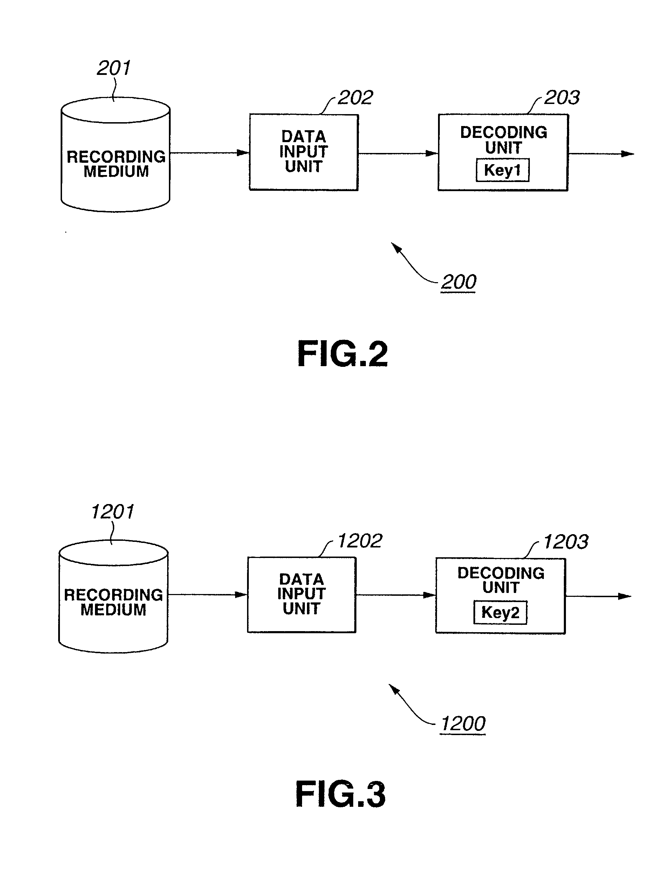

Fig.2 shows a block diagram explaining the function configuration of an additional information detecting apparatus 200 for detecting additional information from the image signals having superimposed thereto the additional information. The additional information detecting apparatus 200 detects the insertion pattern signals encoded in the first encoding method employed by the first encoding unit 104.

As shown in Fig.2, the additional information detecting apparatus 200 includes a recording medium 201 having stored therein the image signals which have additional information, a data input unit 202, and a decoding unit 203.

Read out signals reproduced from the recording medium 201 are supplied to the data input unit 202, and are supplied as reproduced image signals to the decoding unit 203. The decoding unit 203 decodes the reproduced image signals. The decoding unit 203 is so configured as to perform decoding processing corresponding to only the encoding method employed by the first encoding unit 104 using the same key 1. The decoding unit 203 can detect the additional information encoded by only the first encoding unit 104.

Fig.3 shows a block diagram explaining the function configuration of an additional information detecting apparatus 1200 for detecting additional information from the image signals having superimposed thereto the additional information. The additional information detecting apparatus 1200 detects the insertion pattern signals encoded in the second encoding method employed by the second encoding unit 105.

As shown in Fig.3, the additional information detecting apparatus 1200 includes a recording medium 1201 having stored therein the image signals which have additional information, a data input unit 1202, and a decoding unit 1203.

Read out signals reproduced from the recording medium 1201 are supplied to the data input unit 1202, and are supplied as reproduced image signals to the decoding unit 1203. The decoding unit 1203 decodes the reproduced image signals. The decoding unit 1203 is so configured as to perform decoding processing corresponding to only the encoding method employed by the second encoding unit 105 using the same key 2. The decoding unit 1203 can detect the additional information encoded by only the second encoding unit 105.

In the additional information inserting apparatus 100, in case the first encoding unit 104 and the second encoding unit 105 encode the same additional information, that is, in case the encoding method of the first encoding unit 104 is different from that of the second encoding unit 105, and the two kinds of insertion pattern signals are multiplexed in the time divisional manner and superimposed to the image signals, the original additional information can be detected when either of the additional information detecting apparatus 200 or the additional information detecting apparatus 1200 performs decoding processing corresponding to the encoding method thereof.

The two kinds of insertion pattern signals may be encoded such that they are orthogonal with each other, or are not correlated with each other. For example, in case the additional information is encoded using the Digital Watermarking, error detection can be prevented when the two kinds of insertion pattern signals are encoded such that they are orthogonal with each other or are not correlated with each other.

The encoding method employed in the first encoding unit 104 and second encoding unit 105 may be the Digital Watermarking, steganography, or encryption. Otherwise, the encoding method may be that obtained by combining more than two kinds of encoding methods. The method for encoding additional information and inserting the encoded additional information into main information signals is disclosed in Japanese Laying-Open Patent H9-163341 (United States Patent Number 5982997), United States Patent Number 5689587, and United States Patent Number 5848155.

The additional information inserting apparatus 100 shown in Fig.1 has arranged therein two encoding units or the first encoding unit 104 and the second encoding unit 105. On the other hand, three or more encoding units may be arranged so that three or more kinds of insertion pattern signals are multiplexed in the time divisional manner and superimposed to the image signals.

At the side of detecting additional information, it is not necessarily required that a plurality of additional information detecting apparatuses such as those of the additional information detecting apparatus 200 and the additional information detecting apparatus 1200, shown in Fig.2 and Fig.3 respectively, should be employed. That is, the side of detecting additional information may be configured by employing either of the additional information detecting apparatuses.

In the additional information inserting apparatus 100, the additional information to be supplied to the first encoding unit 104 may be equal to that to be supplied to the second encoding unit 105. On the other hand, the additional information to be supplied to the first encoding unit 104 may be different from that to be supplied to the second encoding unit 105. Otherwise, the additional information to be supplied to the first encoding unit 104 may be partially different from that to be supplied to the second encoding unit 105, or both of the additional information further have added thereto another information.

In the time division multiplexing unit 106 and the superimposing unit 107, each additional information may be multiplexed and superimposed to output image signals every frame, every multiple of two frames (24p), every multiple of five fields (60i), approximately 10 seconds, or longer.

The main information signals to which the additional information is superimposed is not restricted to the above-described image signals, and may be speech signals or text signals other than the image signals. The recording medium may be a disc-shaped medium such as a DVD, or may be a tape-shaped medium such as a DVHS or a DV.

The additional information detecting apparatus may be a digital video recording apparatus such as a DVD, a DVHS or a DV. Otherwise, the additional information detecting apparatus may be configured by combining a personal computer and a medium drive mounted thereto. Furthermore, the main information signals and information signals having superimposed thereto the additional information may be transmitted not via a recording medium but via a network or broadcasting waves.

The additional information may be copy controlling information related to data/contents being main information, or may be other information.

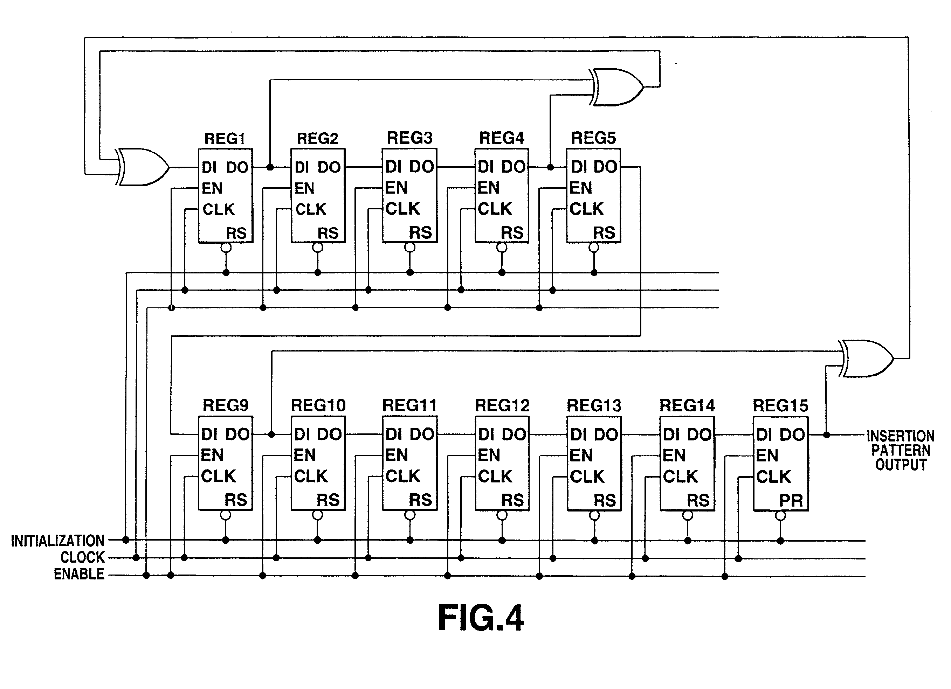

Fig.4 shows a specified circuit diagram of a code modulating apparatus which is used in encoding and decoding processing of the additional information inserting apparatus 100 shown in Fig.1 and the additional information detecting apparatuses 200 and 1200 shown in Fig.2 and Fig.3.

The code modulating apparatus shown in Fig.4 is an example of an insertion pattern generating circuit which is employed in the Digital Watermarking technique. That is, a PN (Pseudorandom Noise) generating circuit generates insertion patterns corresponding to 1 V period of image signals using the spread spectrum so as to spread additional information. In detecting the additional information, the image signals are inversely spread.

The code modulating apparatus shown in Fig.4 is an example of the insertion pattern generating circuit, in which 4095 chips are inserted in 1 V interval.

When clock rate is set to be 250 KHz, 1 period of the insertion patterns is calculated to be 4095/250 = 16.38 msec, which period can be within 1 V interval (= 16.7 msec = 1/60 sec). Thus, phases of insertion pattern codes corresponding to 1 V period can be arranged by inputting a reset signal to an initialization signal every 1 V. So, synchronization of the insertion patterns is arranged, and insertion patterns for inspection are generated, thereby the additional information inserted into the image signals can be detected. The 1 V corresponds to 1 field of the image signals, or may correspond to 1 frame thereof.

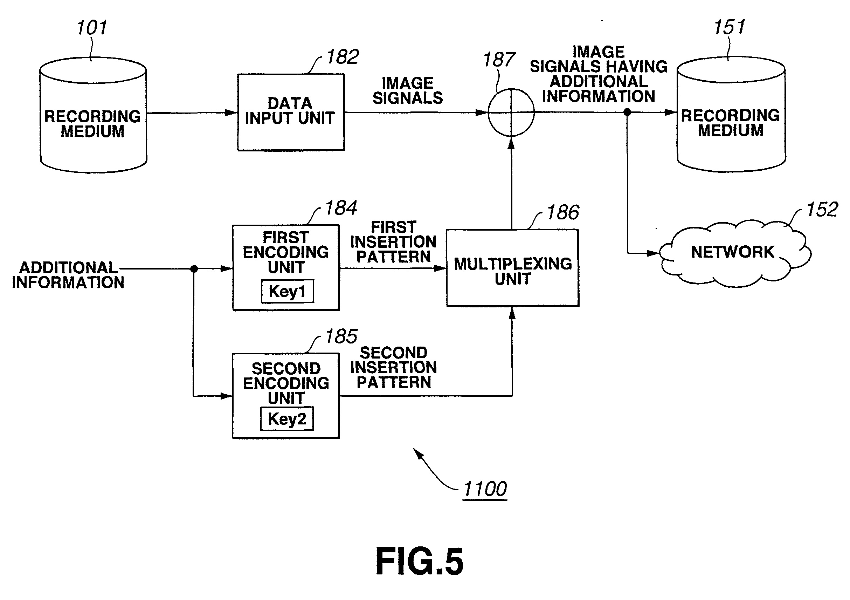

Fig.5 shows another example of a block diagram of an additional information inserting apparatus 1100 according to the present invention. The additional information inserting apparatus 1100 encodes additional information signals using two kinds of encoding methods to generate two kinds of insertion patterns, and multiplexes and superimposes the respective insertion patterns to image signals.

The additional information inserting apparatus 100 shown in Fig.1 multiplexes a plurality of insertion patterns in the time divisional manner, that is, superimposes different insertion patterns each of a predetermined interval to image signals along time direction thereof, while the additional information inserting apparatus 1100 shown in Fig.5 multiplexes insertion patterns and superimposes insertion patterns to image signals using a multiplexing method other than the time division multiplexing.

For example, the additional information inserting apparatus 1100 shown in Fig.5 can employ the spatial multiplexing, frequency division multiplexing, or overwriting multiplexing as a multiplexing method other than the time division multiplexing.

The spatial multiplexing is a multiplexing method which multiplexes insertion patterns to image signals by dividing a region such as each frame or each field of image signals into two regions each with a large region or more regions. Otherwise, image signals may be divided into small blocks or pixels in performing the spatial multiplexing.

In employing the time division multiplexing, there coexist two kinds of intervals, that is, intervals in which the additional information detecting apparatus can detect additional information and those in which the additional information detecting apparatus cannot detect additional information. On the other hand, in employing the spatial multiplexing, even though the range where the insertion patterns are inserted is restricted, there exists no interval in which the insertion patterns cannot be detected. Furthermore, since a plurality of insertion patterns are inserted into 1 frame or 1 field by dividing the region thereof in performing the spatial multiplexing, time required for detection is caused to be extended in accordance with the number of multiplexed insertion patterns.

The frequency division multiplexing is a multiplexing method which multiplexes insertion patterns to image signals by dividing the image signals into a plurality of frequency bands on coefficients of the frequency multiplexing Fourier transform or DCT (Discrete Cosine Transform), and divisionally multiplexing insertion patterns to image signals in the divisional manner corresponding to the divided frequency bands. In employing the frequency division multiplexing, there will also be no interval in which the insertion patterns cannot be detected, while time required for detection is caused to be extended as compared with the time division multiplexing.

The overwriting multiplexing is a multiplexing method which overwrites a plurality of insertion patterns to image signals, and this overwriting multiplexing can be combined with the frequency division multiplexing. In employing the overwriting multiplexing, there will also be no interval where the insertion patterns cannot be detected. In performing the spatial multiplexing, key 1 and key 2 which are different from each other are used so as to enable detection of the insertion patterns inserted into the same region. When the key 1 and key 2 are used, the insertion patterns can be detected by utilizing non-relativity of the key 1 and key 2. Even though the key 1 is equal to the key 2, the insertion patterns can be detected from the same region by changing phases thereof at the time of inserting. Furthermore, the quality (image quality or tone quality) of main information signals can be prevented from being deteriorated by overwriting the inverse of the insertion patterns to image signals with the insertion level thereof reduced. Furthermore, the amount of information is not varied, while time required for detection is caused to be extended.

As shown in Fig.5, the additional information inserting apparatus 1100 includes the recording medium 101 of the image signal reproducing side, a data input unit 182, a first encoding unit 184, a second encoding unit 185, a multiplexing unit 186, and a superimposing unit 187.

Read out signals reproduced from the recording medium 101 are supplied to the data input unit 182, and are supplied as reproduced image signals to the superimposing unit 187.

The additional information signals to be inserted into the image signals are supplied to the first encoding unit 184 and the second encoding unit 185, respectively.

The first encoding unit 184 has a key 1, and encodes the additional information signals using the key 1 in a first encoding method. Then, the first encoding unit 184 supplies the encoded signals as first insertion pattern signals to the multiplexing unit 186.

The second encoding unit 185 has a key 2, and encodes the additional information signals using the key 2 in a second encoding method, which is different from that employed at the first encoding unit 184. Then, the second encoding unit 185 supplies the encoded signals as second insertion pattern signals to the multiplexing unit 186. The key 1 may be equal to the key 2, or may be different from the key 2.

The multiplexing unit 186 multiplexes the first insertion pattern signals supplied from the first encoding unit 184 and the second insertion pattern signals supplied from the second encoding unit 185, and supplies the multiplexed signals to the superimposing unit 187. In multiplexing a plurality of insertion patterns, the spatial multiplexing, frequency division multiplexing, or overwriting multiplexing can be employed. These multiplexing operations are similar to those which had been already explained, and the details thereof are omitted.

The superimposing unit 187 composites the image signals read out from the recording medium 101 and the multiplexed insertion patterns, and outputs image signals having additional information. The output image signals will be recorded to the recording medium 151 of the image signal recording side different from the recording medium 101, which will be used in other apparatuses. The output image signals may be transmitted to other remote apparatuses via the network 152.

In detecting the additional information from the image signals to which the additional information is inserted by the additional information inserting apparatus 1100, the additional information detecting apparatus 200 and the additional information detecting apparatus 1200 shown in Fig.2 and Fig.3, respectively, can be employed.

As in the above, the present invention has been described concerning the best modes with reference to the accompanying drawings. On the other hand, the best modes may be modified or changed without departing from the spirit and scope of the present invention.

In the above-described explanation, the additional information inserting apparatus encodes additional information signals using two kinds of encoding methods, and multiplexes and superimposes the encoded additional information signals to output image signals supplied from a recording medium which has recorded therein the image signals. On the other hand, the present invention is not restricted to the embodiments. That is, main information signals such as speech signals or text signals other than the image signals may be employed to the present invention. Furthermore, the present invention can be employed not only to the case in which information signals are recorded/reproduced to/from a recording medium but also to the case in which information signals are transmitted via a transmitting medium.

That is, the best modes of the present invention have been disclosed as examples, and those examples should not be interpreted restrictedly. So as to interpret the summary of the present invention, refer to the following claims.

### Industrial Applicability

As in the above, the additional information inserting apparatus according to the present invention encodes additional information signals using two or more kinds of encoding methods/encoding formats to generate two or more kinds of insertion patterns encoded by respective methods, and multiplexes or multiplexes in the time divisional manner and superimposes the respective encoded insertion patterns to main information signals. Thus, the additional information can be detected by decoding the encoded insertion patterns in accordance with at least either of the encoding methods/encoding formats.

When the same additional information is encoded by a plurality of encoding means and inserted into the main information signals, even though one set of the additional information is deteriorated due to signal processing, attack, or other causes, the additional information can be detected correctly using the other set of the additional information.

Furthermore, when a plurality of encoding methods/encoding formats are employed, even though the additional information is important information as seen from a view of security, the security information cannot be completely erased, revised, or caused to be useless as long as all the encoding methods are not broken, which can ensure the protection of the copyright.

## Claims

1. An additional information inserting apparatus for superimposing additional information to main information signals, comprising:
means for generating first insertion signals from the additional information and generating second insertion signals from the additional information; and
means for superimposing the respective insertion signals generated from the insertion signal generating means to the main information signals.

2. The additional information inserting apparatus as set forth in Claim 1, wherein the superimposing means superimposes the first insertion signals and the second insertion signals to the main information signals such that the first insertion signals are superimposed to first intervals of the main information signals and the second insertion signals are superimposed to second intervals of the main information signals, and that the first intervals and the second intervals exist alternately along time direction of the main information signals.

3. The additional information inserting apparatus as set forth in Claim 2, wherein the superimposing means superimposes the respective different insertion signals to the main information signals every predetermined period.

4. The additional information inserting apparatus as set forth in Claim 2, wherein the superimposing means superimposes the respective different insertion signals to the main information signals every predetermined number of frames or every predetermined number of fields.

5. The additional information inserting apparatus as set forth in Claim 1, wherein the superimposing means superimposes the first insertion signals and the second insertion signals to a plurality of regions of the main information signals, which regions are obtained by dividing signal units constituting the main information signals.

6. The additional information inserting apparatus as set forth in Claim 3, wherein the main information signals are image signals, and signal units of the main information signals are frames or fields constituting the image signals.

7. The additional information inserting apparatus as set forth in Claim 1, wherein the insertion signal generating means generates the first insertion signals and the second insertion signals from identical additional information.

8. The additional information inserting apparatus as set forth in Claim 1, wherein the insertion signal generating means generates the first insertion signals and the second insertion signals by the use of key information, and generates different insertion signals from the additional information by varying the key information to be used.

9. The additional information inserting apparatus as set forth in Claim 1, wherein the insertion signal generating means generates different insertion signals from the additional information by varying the encoding method.

10. An additional information inserting method for superimposing additional information to main information signals, comprising the steps of:
generating first insertion signals from the additional information and generating second insertion signals from the additional information; and
superimposing the respective insertion signals generated in the insertion signal generating step to the main information signals.

11. The additional information inserting method as set forth in Claim 10, wherein the superimposing step superimposes the first insertion signals and the second insertion signals to the main information signals such that the first insertion signals are superimposed to first intervals of the main information signals and the second insertion signals are superimposed to second intervals of the main information signals, and that the first intervals and the second intervals exist alternately along time direction of the main information signals.

12. The additional information inserting method as set forth in Claim 11, wherein the superimposing step superimposes the respective different insertion signals to the main information signals every predetermined period.

13. The additional information inserting method as set forth in Claim 11, wherein the superimposing step superimposes the respective different insertion signals to the main information signals every predetermined number of frames or every predetermined number of fields.

14. The additional information inserting method as set forth in Claim 10, wherein the superimposing step superimposes the first insertion signals and the second insertion signals to a plurality of regions of the main information signals, which regions are obtained by dividing signal units constituting the main information signals.

15. The additional information inserting method as set forth in Claim 12, wherein the main information signals are image signals, and signal units of the main information signals are frames or fields constituting the image signals.

16. The additional information inserting method as set forth in Claim 10, wherein the insertion signal generating step generates the first insertion signals and the second insertion signals from identical additional information.

17. The additional information inserting method as set forth in Claim 10, wherein the insertion signal generating step generates the first insertion signals and the second insertion signals by the use of key information, and generates different insertion signals from the additional information by varying the key information to be used.

18. The additional information inserting method as set forth in Claim 10, wherein the insertion signal generating step generates different insertion signals from the additional information by varying the encoding method.

19. A recording medium which has recorded therein signals being main information signals having superimposed thereto additional information, wherein first insertion signals generated from the additional information and second insertion signals generated from the additional information are multiplexed and superimposed to the main information signals.

20. A recording medium which has recorded therein signals being main information signals having superimposed thereto additional information, wherein the recording medium is manufactured by undergoing the steps of:
generating first insertion signals from the additional information and generating second insertion signals from the additional information;
superimposing the respective insertion signals generated in the insertion signal generating step to the main information signals; and
recording signals having superimposed thereto the respective insertion signals generated in the insertion signal superimposing step to the recording medium.
